## Europäisches Patentamt

(19) ## European Patent Office

## Office européen des brevets

(11) Numéro de publication: **0 136 959**

**B1**

(12) # FASCICULE DE BREVET EUROPÉEN

(51) Int. Cl.⁴: **B 29 C 47/04,** B 29 C 47/14

(45) Date de publication du fascicule du brevet:
**12.08.87**

(21) Numéro de dépôt: **84420164.0**

(22) Date de dépôt: **02.10.84**

(54) **Filière plate pour l'extrusion de films, feuilles ou plaques de matière plastique multicouches et multicolores.**

(30) Priorité: **03.10.83 FR 8316045**

(43) Date de publication de la demande:
**10.04.85 Bulletin 85/15**

(45) Mention de la délivrance du brevet:
**12.08.87 Bulletin 87/33**

(84) Etats contractants désignés:
**AT BE CH DE GB IT LI LU NL SE**

(56) Documents cité:
**BE-A-896 382
DE-A-1 950 963
FR-A-2 343 582
FR-A-2 454 904
GB-A-1 111 054
US-E-27 992**

**PLASTICS ENGINEERING, vol. 37, no. 8, août 1981, pages 21-24, Manchester, New Hampshire, US; H.C. TSIEN: "Conductive plastic speeds development of advanced storage battery"**

(73) Titulaire: **SIAMP CEDAP REUNIES Société anonyme dite:, 4, quai Antoine 1er, Monaco (MC)**

(72) Inventeur: **Scheibling, Robert, Boulevard de la Mer Villa Val Goto, Cap d'Ail (Alpes- Maritimes) (FR)**

(74) Mandataire: **Maureau, Bernard, Cabinet GERMAIN & MAUREAU 20, boulevard E. Deruelle B.P. 3011, F-69392 Lyon Cédex 03 (FR)**

LIBER, STOCKHOLM 1987

## Description

L'invention a pour objet une filière plate permettant de produire par extrusion des films, feuilles ou plaques de matière plastique multicouches et multicolores qui se présentent sous l'aspect de bandes longitudinales jointives de couleur différente de l'une à l'autre et apparaissant sur une seule et même couche-support de couleur unique et sous une seule et même couche de matière transparente.

De tels films, feuilles ou plaques ont des applications multiples, tout particulièrement dans l'industrie du conditionnement, car ils conviennent entre autres à la fabrication de boîtes ou godets par formage, boîtes pouvant présenter chacune plusieurs coloris ou avoir des couleurs différentes d'une boîte à l'autre dans un même ensemble de boîtes.

Pour obtenir les mêmes effets dans ces applications particulières, il est connu d'utiliser ou bien des feuilles de matère plastique sur lesquelles des bandes de différentes couleurs sont imprimées côte à côte, ou bien des feuilles de matière plastique sur lesquelles sont contrecollées des bandes de couleur differente. Dans les deux cas, les feuilles sont très onéreuses, et leur qualite n'est pas suffisante pour leur permettre de résister à des opérations de thermoformage.

L'invention remédie à ces inconvénients, grâce à un agencement particulier apporté à une filière appartenant à la catégorie des filières plates pour l'extrusion de films, feuilles ou plaques de matière plastique, multicouches et multicolores, dans laquelle des canaux alimentant la couche intermédiaire en matières plastiques de couleurs différentes débouchent dans un logement qui, situé transversalement par rapport à l'axe de direction de l'extrusion, débouche dans un couloir aplati où se forme la couche intermédiaire du film, de la feuille ou de la plaque et qui, avant de déboucher dans l'entrefer de la filière, se raccorde avec deux autres couloirs reliés aux canaux distribuant les matières plastiques destinées à former respectivement la couche-support et la couche de couverture, le logement précité contenant un organe qui répartit, dans la couche intermédiaire les flux de matière plastique admis par les canaux d'alimentation. Une telle filière est connue du document FR-A-2343 582.

Conformément à l'invention la filière est caractérisée en ce que l'organe qui répartit dans la couche intermédiaire les flux de matière plastique est constitué par une mince plaque fixe dont la face supérieure comporte des dents qui sont surélevées par rapport à la plaque et ont une hauteur et une largeur dégressives depuis leur extrémité amont jusqu'à leur extrémité aval au niveau de laquelle elles se terminent par une pointe, ces dents délimitant des espaces trapézoïdaux dont la section considérée dans un plan parallèle au plan de base de la plaque augmente d'amont en aval, de telle sorte que ces espaces soient contigus à leurs extrémités aval, chacun de ces espaces étant alimenté par un des canaux d'alimentation en matière plastique colorée lequel canal introduit la matiere plastique dans l'espace trapézoïdal correspondant, en amont et suivant une direction identique à celle d'extrusion.

Cette plaque aménagée en peigne constitue un élément essentiel de la filière, car elle joue le rôle de répartiteur de la matière plastique colorée, pour la réalisation d'une feuille ou d'un film formé par des bandes rigoureusement jointives se différenciant de l'une à l'autre par leur couleur.

Lorsque la feuille ou le film ne comporte que deux couleurs pour ses diverses bandes, le peigne est suffisant à lui seul pour réaliser la répartition de la matière plastique colorée. Si, par contre, le nombre de couleurs est supérieur à deux, le peigne est alors associé, selon une autre caractéristique de l'invention, à au moins une autre plaque qui est placée au dessus de lui et dans le même logement que lui dans la filière, et qui, en combinaison avec lui, assure la distribution d'une matière plastique d'une certaine couleur.

Le nombre de ces plaques superposées est fonction du nombre de couleurs à prévoir dans le film ou la feuille. Le peigne et une plaque correspondent à trois couleurs, le peigne et deux plaques a quatre couleurs, et ainsi de suite...

L'invention sera bien comprise d'ailleurs, et ses avantages, ainsi que d'autres caractéristiques ressortiront bien de la description qui suit, en référence au dessin schématique annexé, représentant une forme d'exécution de cette filière et dans lequel:

Figure 1 est une vue en perspective d'une portion de feuille conforme à l'invention;

Figures 2 et 3 sont des vues très schématiques respectivement en perspective et en plan illustrant l'agencement permettant la fabrication de cette feuille;

Figures 4 et 5 sont des vues respectivement en coupe longitudinale suivant 4-4 de figure 5 et en coupe transversale suivant 5-5 de figure 4 d'une filière pour la fabrication de cette feuille.

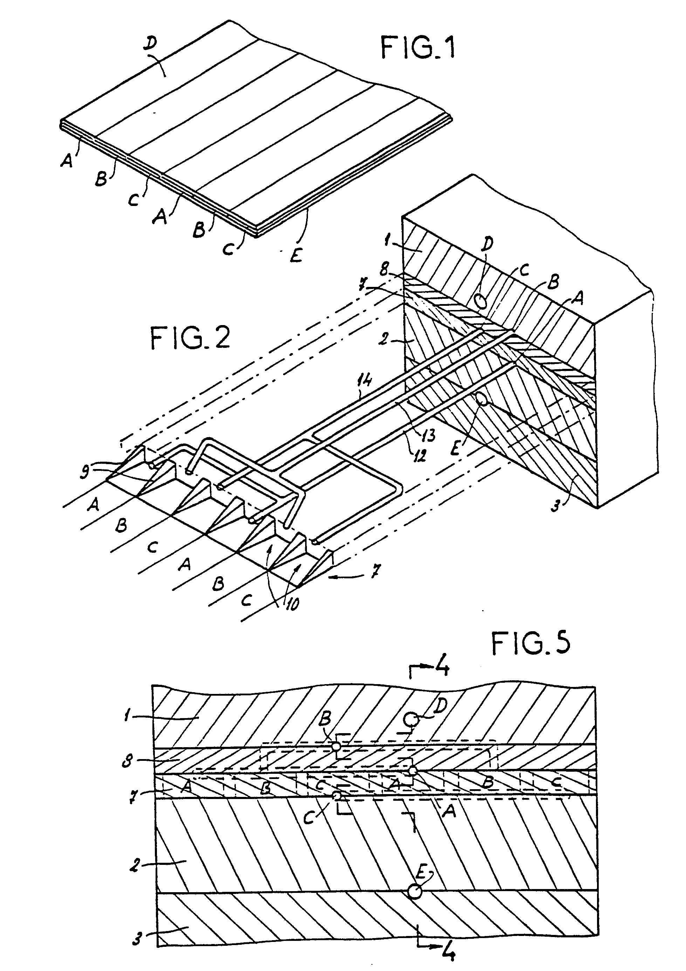

Comme le montre la figure 1, une feuille conforme à l'invention comprend six bandes de matière plastique (A, B, C, A, B, C) incluses entre une sous-couche opaque (D) et une couche de couverture transparente (E). Les bandes (A, B, C) sont de couleur differente et apparaissent au travers de la couche transparente (E). La nature des diverses matières utilisées est quelconque, par exemple du polystyrène.

Pour la fabrication de cette feuille qui est multicouche et multicolore, il est fait usage d'une filière plate comportant, comme cela est connu, un corps haut (1), un corps médian (2), un corps bas (3) et deux lèvres (4, 5) qui délimitent l'entrefer (6) de hauteur réglable determinant l'épaisseur de la feuille.

Dans les divers corps de la filière sont aménagés les canaux d'alimentation en matière plastique, canaux qui sont au nombre de cinq, à savoir trois canaux pour les trois matières plastiques colorées, un canal pour la matière plastique opaque de sous-couche, et un canal pour la matière plastique transparente de couverture.

C'est l'agencement de ces divers canaux et du système de répartition des divers flux de matière plastique qui constitue la particularité de la filière.

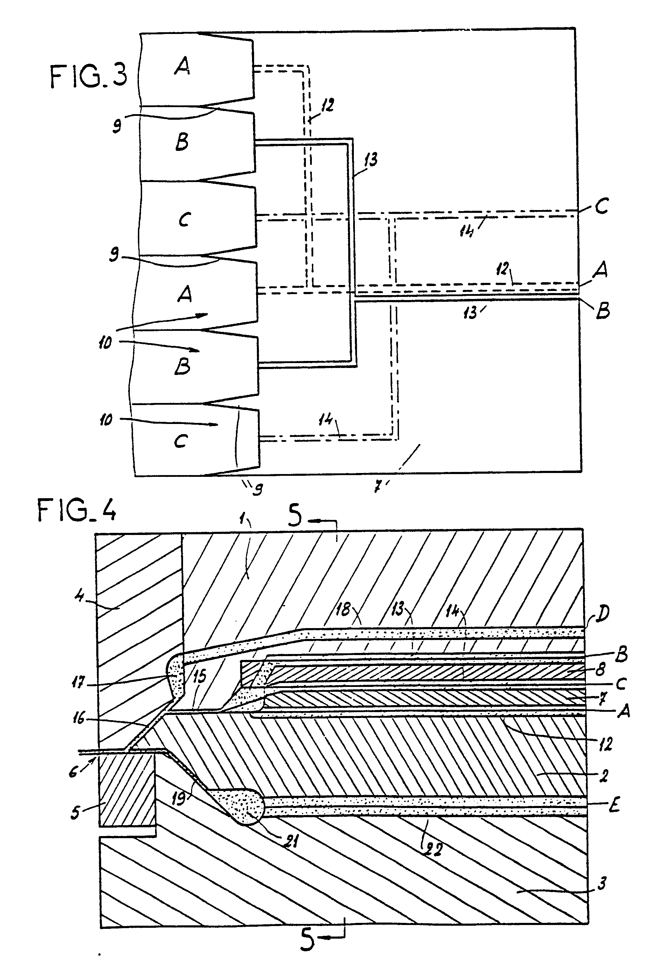

Le corps haut (1) et le corps médian (2) délimitent un logement debouchant sur la face AR de la filière et dans lequel sont superposées deux plaques (7 et 8). Celle (7) comporte, sur son bord AV, un profil assimilable à celui d'un peigne, car elle est munie de dents (9) se terminant en pointe et délimitant des espaces trapézoïdaux (10) dans chacun desquels débouche un canal d'alimentation en matière plastique colorée. Considérant les trois matières plastiques colorées (A, B, C), elles sont distribuées par trois canaux longitudinaux (12, 13, 14) qui, à l'intérieur de la filière, se subdivisent chacun en deux canaux puisque la feuille doit comprendre six bandes colorées. Pour faciliter la compréhension de cet agencement, les canaux distributeurs de la matière plastique de couleur (A) sont représentés en traits discontinus à la figure 3; ceux distributeurs de la matière plastique de couleur (B) le sont en traits pleins; et ceux distributeurs de la matière plastique de couleur (C) le sont en traits alternés.

Parmi ces canaux celui (12) destiné à la matière plastique de couleur (A) est aménagé dans la face supérieure du corps médian (2) de la filière et dans la face inférieure de la plaque-peigne (7); celui (13) destiné à la matière plastique de couleur (B) est aménagé dans la face inférieure du corps haut (1) et dans la face supérieure de la plaque intercalaire (8); et celui (14) destiné à la matière plastique de couleur (C) est aménagé dans la face supérieure de la plaque-peigne (7) et dans la face inférieure de la plaque intercalaire (8).

Chaque canal (12, 13, 14) est profilé, du côté aval, pour déboucher par chacune de ses deux branches dans un espace (10) délimité entre deux dents (9) de la plaque-peigne (7). Il est dès lors concevable que, comme le montre la figure 3, la matière plastique provenant de chaque canal se transforme, dans cet espace (10), en une lame qui, à l'extrémité de chaque dent du peigne, se réunit à la lame voisine en formant ainsi une nappe.

En aval du peigne (7) cette nappe formée par la juxtaposition de ces lames se déplace dans un couloir (15) délimité par le corps haut (1) et le corps médian (2) de la filière et débouchant dans un autre couloir (16) délimité par le corps médian (2) et par la lèvre supérieure (4).

Ce couloir (16) communique, par son extrémité avant, avec un canal transversal (17) dans lequel débouche un canal longitudinal (18) par lequel est admise la matière plastique destinée à constituer la couche de couverture (E) de la feuille finale; et par son extrémité aval ce canal (16) débouche dans l'entrefer (6) des deux lèvres (4, 5) de la filière; dans cet entrefer débouche en outre un couloir (19) issu d'un canal transversal (21) alimenté par un canal longitudinal (22) en matière plastique destinée à constituer la couche-support (D) de la feuille multicolore finale.

Comme il va de soi, l'invention ne se limite pas à la seule forme d'exécution de cette filière qui a été ci-dessus indiquée à titre d'exemple; elle en embrasse, au contraire, toutes les variantes de réalisation, quels que soient notamment les moyens prévus pour régler la vitesse de déplacement des diverses veines et lames de matière plastique, ces moyens pouvant particulièrement être constitués par des robinets individuels associés aux divers canaux.

## Revendications

1. Filière plate pour l'extrusion de films, feuilles ou plaques de matière plastique, multicouches et multicolores, dans laquelle des canaux (12, 13, 14) alimentant la couche intermédiaire (A, B, C) en matières plastiques de couleurs différentes débouchent dans un logement qui, situé transversalement par rapport à l'axe de direction de l'extrusion, débouche dans un couloir aplati (15) où se forme la couche intermédiaire du film, de la feuille ou de la plaque et qui, avant de déboucher dans l'entrefer (6) de la filière, se raccorde avec deux autres couloirs (16, 19) relies aux canaux (18, 22) distribuant les matières plastiques destinées à former respectivement la couche-support (D) et la couche de couverture (E), le logement précité contenant un organe qui répartit, dans la couche intermédiaire (A, B, C), les flux de matière plastique admis par les canaux d'alimentation (12, 13, 14), caractérisée en ce que cet organe est constitué par une mince plaque fixe (7) dont la face supérieure comporte des dents (9) qui sont surélevées par rapport à la plaque et ont une hauteur et une largeur dégressives depuis leur extrémité amont jusqu'à leur extrémité aval au niveau de laquelle elles se terminent par une pointe, ces dents (9) délimitant des espaces trapézoïdaux (10) dont la section considérée dans un plan parallèle au plan de base de la plaque (7) augmente d'amont en aval, de telle sorte que ces espaces (10) soient contigus à leurs extrémités aval, chacun de ces espaces (10) étant alimenté par un des canaux d'alimentation (12, 13, 14) en matière plastique colorée (A, B, C) lequel canal introduit la matière plastique dans l'espace trapézoïdal correspondant, en amont et suivant une direction identique à celle d'extrusion.

2. Filière selon la revendication 1, pour la production d'un film, d'une feuille ou d'une plaque présentant plus de deux couleurs, caractérisée en ce que le peigne (7) est associé à au moins une autre plaque (8) qui est placée au dessus de lui et dans le même logement que lui dans la filière, et qui, en combinaison avec lui, assure la distribution d'une matière plastique d'une certaine couleur.

3. Filière selon les revendications 1 et 2, caractérisé en ce qu'elle est constituée par trois corps haut (1), médian (2) et bas (3), dont celui haut (1) et celui médian (2) délimitent un logement parallélépipèdique recevant de bas en haut la plaque-peigne (7) et la ou les plaques (8), en ce que les canaux (12, 13, 14) pour l'admission des veines de matière plastique colorée (A, B, C) dans les espaces (10) du peigne sont aménagés respectivement sous la plaque-peigne (7), entre cette plaque et la plaque (8) et au dessus de la plaque (8), en ce que les espaces (10) du peigne (7) alimentés par les canaux (12, 13, 14) débouchent dans un couloir (15) délimité par le corps haut (1) et le corps médian (2) de la filière (1, 2), et en ce que deux canaux (18, 22) aménagés dans le corps haut (1) et le corps bas (3) pour l'admission des veines de matière plastique de couche-support (D) et de couverture (E) débouchent respectivement dans un couloir (16) communiquant avec celui (15), et dans un couloir (19), lesquels couloirs (16, 19) aboutissent dans l'entrefer (6) délimité par les deux lèvres (4, 5) de la filière.

4. Filière selon l'une quelconque des revendications 1 à 3, caractérisée en ce qu'un robinet de réglage du flux de matière plastique est placé sur chacun des canaux (12, 13, 14, 18, 22).

## Patentansprüche

1. Düsenplatte zur Extrusion von mehrschichtigen und mehrfarbigen dünnen Schichten, Folien oder Platten aus Kunststoff, in der die Zwischenschicht (A, B, C) mit Kunststoffen unterschiedlicher Farben speisende Kanäle (12, 13, 14) in einen Aufnahmeraum münden, der in bezug auf die Achse der Richtung der Extrusion quer liegend in einen abgeflachten Verbindungskanal (15) mündet, wo sich die Zwischenschicht der dünnen Schicht, der Folie oder der Platte bildet und der sich vor dem Einmünden in den Spalt (6) der Düse mit zwei weiteren Verbindungskanälen (16, 19) verbindet, die mit den die zur Bildung der Auflageschicht (D) bzw. der Deckschicht (E) bestimmte Kunststoffe verteilenden Kanälen (18, 22) verbunden sind, wobei der vorerwähnte Aufnahmeraum eine Einrichtung enthält, die die durch die Speisekanäle (12, 13, 14) zugeführten Kunststoffflüsse in der Zwischenschicht (A, B, C) verteilt, dadurch gekennzeichnet, daß diese Einrichtung durch eine dünne feste Platte (7) gebildet ist, deren Oberseite Zähne (9) aufweist, die in bezug auf die Platte erhöht sind und von ihrem stromaufwärtigen Ende bis zu ihrem stromabwärtigen Ende, in dessen Höhe sie mit einer Spitze enden, eine abnehmende Höhe und Breite besitzen, wobei diese Zähne (9) trapezförmige Räume (10) begrenzen, deren Querschnitt, in einer zur Basisebene der Platte (7) parallelen Ebene betrachtet, von stromaufwärts nach stromabwärts auf eine solche Weise zunimmt, daß diese Räume (10) an ihren stromabwärtigen Enden aneinander angrenzen, wobei jeder dieser Räume (10) durch Speisekanäle (12, 13, 14) für gefärbten Kunststoff (A, B, C) gespeist ist, wobei der Kanal den Kunststoff in den entsprechenden trapezformigen Raum stromaufwärts und einer mit der der Extrusion identischen Richtung folgend einführt.

2. Düse nach Anspruch 1, zur Erzeugung einer dünnen Schicht, einer Folie oder einer Platte, die mehr als zwei Farben aufweist, dadurch gekennzeichnet, daß der Kamm (7) mindestens einer weiteren Platte (8) zugeordnet ist, die oberhalb von ihm und im selben Aufnahmeraum wie er in der Düse angeordnet ist und die in Kombination mit ihm die Verteilung eines Kunststoffes mit einer bestimmten Farbe sicherstellt.

3. Düse nach den Ansprüchen 1 und 2, dadurch gekennzeichnet, daß sie durch drei Körper, oberer (1), mittlerer (2) und unterer (3), gebildet ist, von denen der obere (1) und der mittlere (2) einen quaderförmigen Aufnahmeraum begrenzen, der von unten nach oben die Kammplatte (7) und die Platten (8) aufnimmt, daß die Kanäle (12, 13, 14) für die Zuleitung der Ströme mit gefärbtem Kunststoff (A, B, C) in die Räume (10) des Kamms jeweils unterhalb der Kammplatte (7), zwischen dieser Platte und der Platte (8) und oberhalb der Platte (8) angeordnet sind, daß die durch die Kanäle (12, 13, 14) gespeisten Räume (10) des Kamms (7) in einen Verbindungskanal (15) münden, der durch den oberen Körper (1) und den mittleren Körper (2) der Düse (1, 2) begrenzt ist, und daß zwei im oberen Körper (1) und im unteren Körper (3) angeordnete Kanäle (18, 22) für die Zuführung der Kunststoffströme der Auflageschicht (D) und der Decke (E) jeweils in einen mit diesem (15) in Verbindung stehenden Verbindungskanal (16) und in einen Verbindungskanal (19) münden, wobei die Verbindungskanäle (16, 19) an den durch die beiden Lippen (4, 5) der Düse begrenzten Spalt (16) anstoßen.

4. Düse nach einem beliebigen der Ansprüche 1 bis 3, dadurch gekennzeichnet, daß ein Ventil zur Regulierung der Kunststoffflüsse auf jedem der Kanäle (12, 13, 14, 18, 22) angeordnet ist.

## Claims

1. A flat die for the extrusion of multi-layered and multi-coloured films, sheets or plates of plastics material, in which die channels (12, 13, 14), for supplying plastics materials of different colours to an intermediate layer (A, B, C), open into a cavity positioned transversely with respect to the direction of extrusion, which leads into a smooth passage (15) in which the intermediate layer of the film, sheet or plate is formed, and which, before emerging from the outlet (6) of the die, joins with two other ducts (16, 19) which are linked to channels (18, 22) for distributing the plastics materials intended for forming a support layer (D) and a covering layer (E) respectively, the above-mentioned cavity containing a means for spreading out, in the intermediate layer (A, B, C), the streams of plastics material admitted by the supply channels (12, 13, 14), the flat die being characterised in that said means comprises a thin fixed plate (7) the upper face of which is provided with raised teeth (9) having a height and a width which decrease from their upstream end to their downstream end where they end in a point, the teeth (9) delimiting trapezoidal spaces (10), the profile of which, considered in a plane which is parallel to the base plane of the plate (7), increases from upstream to downstream in such a way that the spaces (10) are in contact at their downstream ends, each of these spaces (10) being supplied with coloured plastics material (A, B, C) by the channels (12, 13, 14) which introduce the plastics material into the trapezoidal spaces at their upstream ends and moving in the direction of extrusion.

2. A die according to claim 1, for the production of films, sheets or plates having more than two colours, characterised in that the comb (7) is associated with a least one other plate (8) which is positioned above the comb in the cavity, and which, in combination with the comb, ensures the correct spreading out of a plastics material of a particular colour.

3. A die according to claims 1 and 2, characterised in that: it comprises three bodies, an upper (1), an intermediate (2) and a lower (3) body, of which the upper body (1) and the intermediate body (2) define a parallelepiped cavity which contains the comb (7) and the plate or plates (8); the channels (12, 13, 14) for supplying coloured plastics material (A, B, C) to the spaces (10) of the comb are arranged under the comb (7), between the comb and the plate (8), and above the plate (8) respectively; the spaces (10) of the comb (7) supplied by the channels (12, 13, 14) open into the smooth passage (15) defined by the upper body (1) and the intermediate body (2) of the die (1, 2); and two channels (18, 22), provided in the upper body (1) and the lower body (3) respectively, for supplying plastics material for the support layer (D) and the covering layer (E) open into the duct (16) communicating with the smooth passage (15), and into the duct (19) respectively, which ducts (16, 19) end at the outlet (6) defined by two end pieces (4, 5) of the die.

4. A die according to any one of claims 1 to 3, characterised in that a valve for regulating the flow of plastics material is provided for each of the channels (12, 13, 14, 18, 22).

FIG.1

FIG.2

FIG.5

FIG.3

FIG.4